# EUROPÄISCHE PATENTSCHRIFT

(11) **EP 1 208 019 B1**
(45) Veröffentlichungstag und Bekanntmachung des Hinweises auf die Patenterteilung: **29.01.2003**
(21) Anmeldenummer: 00960348.1
(22) Anmeldetag: 11.08.2000
(51) Int. Cl.: B60R 11/02, H04M 1/06

(54) **HÖRSPRECHEINRICHTUNG**
LISTENING AND SPEAKING DEVICE
SYSTEME DE COMMUNICATION VOCALE

(30) Priorität: 26.08.1999 DE 19940640
(43) Veröffentlichungstag der Anmeldung: 29.05.2002
(73) Patentinhaber: Peiker, Andreas, 61381 Friedrichsdorf/Ts (DE)
(72) Erfinder: Peiker, Andreas, 61381 Friedrichsdorf/Ts (DE)
(74) Vertreter: Patentanwälte Eisele, Otten & Roth
(86) Internationale Anmeldenummer: DE0002699
(87) Internationale Veröffentlichungsnummer: WO01015939

(56) Entgegenhaltungen:
- DE-U- 29 705 230
- US-A- 5 189 358
- PATENT ABSTRACTS OF JAPAN vol. 009, no. 255 (E-349), 12. Oktober 1985 (1985-10-12) & JP 60 103761 A (FUJITSU KK), 8. Juni 1985 (1985-06-08)
- PATENT ABSTRACTS OF JAPAN vol. 014, no. 067 (E-0885), 7. Februar 1990 (1990-02-07) & JP 01 286553 A (NEC CORP), 17. November 1989 (1989-11-17)
- PATENT ABSTRACTS OF JAPAN vol. 010, no. 325 (E-451), 6. November 1986 (1986-11-06) & JP 61 131920 A (FUJITSU LTD), 19. Juni 1986 (1986-06-19)
- PATENT ABSTRACTS OF JAPAN vol. 010, no. 184 (E-415), 27. Juni 1986 (1986-06-27) & JP 61 030851 A (FUJITSU LTD), 13. Februar 1986 (1986-02-13)
- PATENT ABSTRACTS OF JAPAN vol. 005, no. 011 (E-042), 23. Januar 1981 (1981-01-23) & JP 55 141838 A (FUJITSU LTD), 6. November 1980 (1980-11-06)

## Beschreibung

Die Erfindung betrifft eine Hörsprecheinrichtung nach dem Oberbegriff des Patentanspruchs 1.

Insbesondere in Kraftfahrzeugen kommen Hörsprecheinrichtungen zum Einsatz, die aus einem Handapparat und einer Aufnahmevorrichtung für denselben bestehen. Um zu verhindern, daß der Handapparat bei der Beschleunigung, bei Kurvenfahrten und Fahrten im Gelände aus der Aufnahmevorrichtung springt, sind aus dem Stand der Technik folgende Maßnahmen bekannt.

Die Aufnahmevorrichtung ist als schalenartiges Bauteil ausgestaltet, wobei in dessen Vertiefung zwei Nasen angeordnet sind. Der Handapparat ist im Bereich seiner Höreinrichtung auf die Schale angepaßt und weist zwei Vertiefungen auf, in welche die Vorsprünge eingreifen. Hierbei ist ein in der Schale angeordneter Vorsprung gefedert und mit einer Anlaufschräge ausgebildet. Beim Einlegen des Handapparats wird dieser Vorsprung zurückgeschoben und rastet dann in einer der Ausnehmungen des Handapparats ein. Zur Entnahme des Handapparats wird der gefederte Vorsprung mit Hilfe eines an der Schale angeordneten Druckmechanismus zurückgezogen, so daß der Handapparat entnehmbar ist. Weiterhin ist auf der Unterseite der Schale ein Stabmagnet angeordnet. Das Magnetfeld dieses Stabmagneten wirkt im aufgelegten Zustand des Handapparats auf einen in diesem angeordneten induktiven Schalter. Der induktive Schalter signalisiert der Elektronik der Hörsprecheinrichtung das Aufgelegtsein des Handapparats. Das heißt, er übernimmt die Funktion einer Hook-Taste.

Weiterhin ist eine Aufnahmevorrichtung bekannt, die ebenfalls als Schale ausgebildet ist. Auch diese weist zwei Vorsprünge auf, von denen einer gefedert gelagert und mit Gleitflächen versehen ist. Zur Entnahme des Handapparats muß dieser kräftig nach oben gekippt werden, da das Zurückführen des gefederten Vorsprungs allein über am Handapparat und am Vorsprung angebrachte Gleitschrägen erfolgt. In der Fachwelt wird diese Art der Entnahme als "Rausreiß-Variante" bezeichnet. Die Funktion der Hook-Taste wird hier ebenfalls durch einen in der Schale angeordneten Stabmagneten und einen im Handapparat angeordneten induktiven Schalter realisiert.

Nachteilig am Stand der Technik ist die aufwendige Gestaltung der Aufnahmevorrichtungen, denn zur Realisierung eines gefederten Vorsprungs sind regelmäßig eine Vielzahl von Bauteilen erforderlich. Diese müssen durch eine aufwendige Montage zusammengefügt werden, wobei die Montage so aufwendige Schritte wie Einlegen einer Feder und Verschrauben von Einzelteilen enthält.

Auch das Anbringen eines Magneten an der Aufnahmevorrichtung ist zeit- und kostenintensiv.

Diese Nachteile wirken sich besonders gravierend aus, da es sich bei der Aufnahmevorrichtung um eine Bauteil handelt, das individuell auf die Befestigungsmöglichkeiten im einzelnen Fahrzeugmodell angepaßt ist. Dies heißt, daß für nahezu jeden Fahrzeugtyp eine speziell gestaltete Aufnahmevorrichtung erforderlich ist, wobei die Einbauvoraussetzungen teilweise so unterschiedlich sind, daß die Aufnahmevorrichtung völlig neu konstruiert werden muß.

Nicht zuletzt fallen die bekannten Aufnahmevorrichtungen in Bezug auf das Fahrzeugrecycling negativ auf, da in diesen unterschiedliche Materialien (Kunststoff, Metall, Magnet, Klebstoff) verarbeitet sind. Diese Kombination von Werkstoffen ermöglicht ein sortenreines Recycling nur unter stark erhöhtem Aufwand.

Auch aus handhabungstechnischen Gründen sind die bekannten Lösungen nicht zufriedenstellend. Die Lösung mit dem an der Aufnahme angeordneten Druckknopf erfordert zur Entnahme erhebliche Konzentration, da nicht nur der Handapparat sicher gegriffen werden muß, sondern gleichzeitig auch noch der sich an einem weiteren Bauteil befindende Druckknopf betätigt werden muß. Auch die "Rausreiß-Variante" erfordert zumindest beim Neuling, z.B. einem Mietwagennutzer, der sonst mit einer anderen Hörsprecheinrichtung umgeht, hohe Konzentration. Denn auf die erfolglose Suche nach einem Entriegelungsknopf folgen beim Neuling zunächst Bedenken gegen einen massiven Umgang mit dem Handapparat, denen wiederum Überlegungen, in welche Richtung "Gewalt" anzuwenden ist, nachfolgen. All diese Überlegungen lenken den Nutzer vom Straßenverkehr oder einer anderen Tätigkeit unnötig ab.

Aus der JP 60103761 A ist eine Hörsprecheinrichtung mit Handapparat und Aufnahmevorrichtung nach dem Oberbegriff des Anspruchs 1 bekannt geworden. Mittels eines im Handapparat angeordneten Tasters erfolgt eine Verriegelung und/oder Entriegelung des Handapparates gegenüber der Aufnahmevorrichtung bei gleichzeitiger Betätigung eines elektromechanischen Schalters. Nachteilig an dieser Hörsprecheinrichtung ist die beschränkte Funktion des Tasters im Handapparat.

Der Erfindung liegt die Aufgabe zugrunde, eine Hörsprecheinrichtung der eingangs beschriebenen Art zu entwickeln, die eine einfache, kostengünstig herzustellende Aufnahmevorrichtung aufweist, technische Funktionen auf den Handapparat konzentriert und eine einfache Aufnahme des Handapparats durch die Auflage erlaubt.

Diese Aufgabe wird in Verbindung mit dem Oberbegriff des Patentanspruchs 1 erfindungsgsgemäß durch die kennzeichnenden Merkmale des Patentanspruchs 1 gelöst.

Bei der erfindungsgemäßen Hörsprecheinrichtung erfolgt die Verriegelung und/oder Entriegelung zwischen Aufnahmevorrichtung und Handapparat durch einen im Handapparat angeordneten Taster, wobei die Kupplungseinrichtung in gekuppeltem Zustand von Aufnahmevorrichtung und Handapparat einen elektromechanischen Schalter betätigt. Auf diese Weise wird erreicht, daß die Ver- und Entriegelungsmechanik vom Telefonierenden einfach bedient werden kann, da der Handapparat sowieso gegriffen werden muß. Weiterhin wird die aufwendige Bauteilkombination Magnet/induktiver Schalter durch einen einfachen, geschützt im Handapparat liegenden elektromechanischen Schalter ersetzt. Darüber hinaus ist es vorteilhaft, daß nun die als Auflage oder Aufnahme ausgeführte Aufnahmevorrichtung als einfaches sortenreines Spritzgußbauteil vorliegt. Bei einer Umgestaltung bzw. Anpassung dieses Spritzgußteiles an verschiedenen Fahrzeugtypen muß nur noch darauf geachtet werden, daß die Kupplungsvorrichtung und die Formgebung für die Mulde zum Handapparat passen.

Eine erfindungsgemäße Ausführung des Erfindungsgegenstandes sieht vor, den Taster gleichzeitig für die Betätigung eines elektromechanischen Schalters vorzusehen. Auf diese weise werden mindestens zwei Bauteile, nämlich Feder und Taster eingespart. Dies bringt auch den Vorteil, daß der Aufbau platzsparender erfolgen kann bzw. daß die Verlegung der Verriegelungsmechanik von der Aufnahmevorrichtung in den Handapparat keinen zusätzlichen Bauraum beansprucht.

Gemäß der erfindungsgemäßen Ausführungsform des Erfindungsgegenstandes ist der Taster gleichzeitig für die Betätigung einer PTT-Taste vorgesehen. Dies ist besonders vorteilhaft, da sowohl für die PTT-Tastenfunktion als auch für die Kupplungsfunktion eine griffgünstige Anordnung des Tasters erforderlich ist.

Es ist vorteilhaft, wenn die Aufnahmevorrichtung mindestens einen weiteren Vorsprung aufweist, der in eine Ausnehmung des Gehäuses des Handapparats einsteckbar ist. Somit wird der Handapparat und die Aufnahmevorrichtung auch beim Einsatz kleiner Hintergrifftiefen der Kupplungsteile sicher zusammengehalten.

Erfindungsgemäß wird weiter vorgeschlagen, der an der Hörsprecheinrichtung angeordnete Taster durch mindestens eine Führung und/oder eine als Blattfeder ausgestaltete Führung in Bewegungsrichtung zu führen, wobei der Taster durch mindestens eine Feder in Richtung der Sperrstellung beaufschlagt ist. Durch diese Anordnung wird der Taster weitgehend von seitlichen Belastungen freigehalten und nimmt seine Grundstellung selbsttätig ein.

Eine zweckmäßige Ausgestaltung des Erfindungsgegenstandes sieht vor, die am Handapparat angeordnete Taste gabelförmig auszugestalten und gegebenenfalls eine Zinke zur Betätigung des elektromechanischen Schalters und eine weitere Zinke zum Einund/oder Auskuppeln vorzusehen. Auf diese Weise sind die auf den Kupplungsarm des Tasters wirkenden Kräfte nahezu vollständig von der auf den elektromechanischen Schalter wirkenden Zinke entkoppelt und der elektromechanische Schalter ist vor einer Beschädigung durch die Zinke geschützt.

Eine weitere Ausbildung des Gegenstandes der Erfindung sieht vor, daß ein Kupplungsteil als hakenförmige Nase vorgesehen ist, die an einer Seite eine Begrenzungswand aufweist, wobei die Begrenzungswand ein vollständiges Durchdrücken des Tasters verhindert. Durch diese Konstruktion wird einerseits eine Betätigung des elektromechanischen Schalters in aufgelegtem Zustand des Handapparats verhindert und andererseits bewirkt, daß der als Schieber ausgestaltete Taster zum Entkuppeln des Handapparats nicht unnötig weit eingedrückt wird.

Schließlich sieht eine vorteilhafte Ausführung des Erfindungsgegenstandes vor, daß statt des Handapparats eine Haltevorrichtung zur Aufnahme eines Mobilfunktelefons zum Einsatz kommt, wobei die Haltevorrichtung einen Ver- und Entriegelungsmechanismus aufweist und mit der Aufnahmevorrichtung koppelbar ist. Wenn diese Haltevorrichtung zusammen mit dem eingeklipsten Mobiltelefon als Einheit abgenommen wird, ist sie wie ein Handapparat verwendbar.

Weitere Einzelheiten der Erfindung werden in den Zeichnungen anhand von schematisch dargestellten Ausführungsbeispielen beschrieben.

Hierbei zeigt:
- Fig. 1: eine perspektivische Ansicht einer Hörsprecheinrichtung, bestehend aus einem Handapparat und einer Auflage,
- Fig. 2: eine perspektivische Ansicht einer Auflage,
- Fig. 3: einen Schnitt entlang der Schnittlinie III-III durch die in Figur 2 dargestellte Auflage,
- Fig. 4: eine perspektivische Ansicht des in Fig. 1 dargestellten Handapparats,
- Fig. 5: eine perspektivische Ansicht einer Halbschale eines Handapparats mit einer erfindungsgernäßen Steuereinheit,
- Fig. 6: eine Draufsicht auf die in Figur 5 dargestellte Steuereinheit,
- Fig. 7: eine Seitenansicht der in den Figuren 5 und 6 dargestellten Steuereinheit mit geschnittenen Teilansichten des Handapparats und der Auflage,
- Fig. 8: eine Seitenansicht des in den Figuren 5, 6, 7 dargestellten Tasters,
- Fig. 9: eine Draufsicht auf den in den Figuren 5, 6, 7, 8 dargestellten Taster,
- Fig. 10: eine vereinfachte Draufsicht auf die Innenseite einer Halbschale mit Taster bei auf die Auflage aufgelegtem Handapparat.

### Beschreibung der Ausführungsbeispiele:

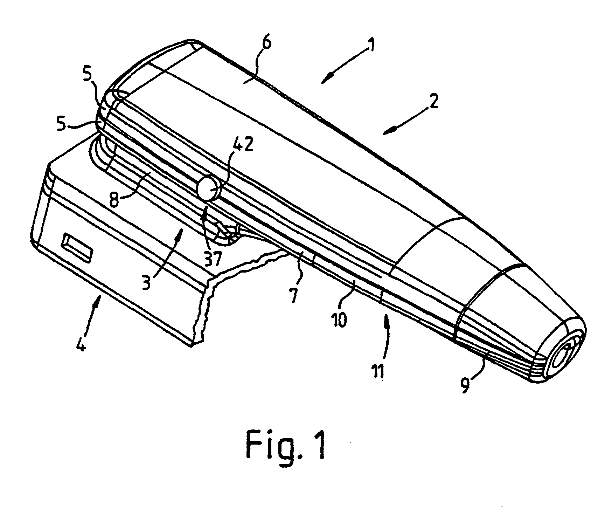

Figur 1 zeigt eine perspektivische Ansicht einer Hörsprecheinrichtung 1, die aus einem Handapparat 2 und einer Auflage 3 besteht. Die Auflage 3 steht in Verbindung mit einem Unterbau 4. Gemäß einer nicht dargestellten Ausführungsvariante ist die Auflage 3 direkt mit einem Fahrzeugteil wie z.B. einer Mittelkonsole insbesondere durch eine Verschraubung oder Verklebung verbunden. Der Handapparat 2 besteht aus zwei Halbschalen 5, genauer einer Rückschale 6 und einer Frontschale 7, die insbesondere durch Rastmittel und Verschraubungen miteinander verbunden sind. Weiterhin weist der Handapparat einen Hörbereich 8 und einen Sprechbereich 9 auf. Mit dem Hörbereich 8 ruht der Handapparat 2 in aufgelegtem Zustand auf der Auflage 3. Der Sprechbereich 9 und ein zwischen dem Sprechbereich 9 und dem Hörbereich 8 liegender Mittelbereich 10 liegen berührungslos über dem Unterbau 4 (der Unterbau ist in diesem Bereich nicht dargestellt). Somit wird zwischen dem Unterbau 4 und dem Mittelbereich 10 und dem Sprechbereich 9 ein Spalt 11 ausgebildet. Weiterhin ist am Handapparat 2 auf der Höhe des Sprechbereichs 8 ein Taster 37 angeordnet, dessen Kopf 42 zu sehen ist.

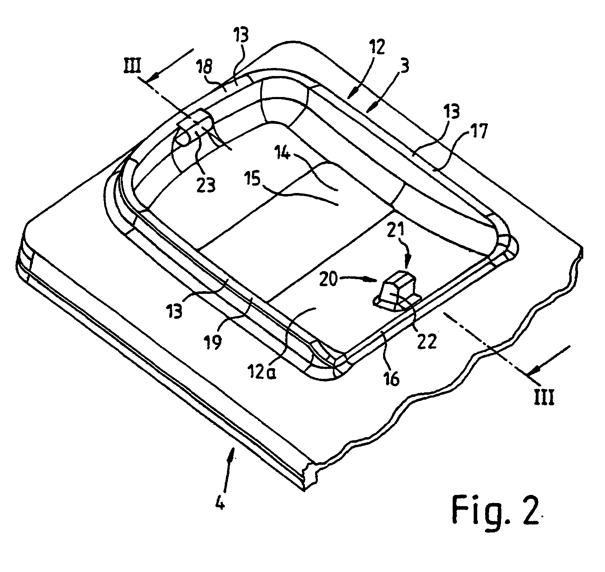

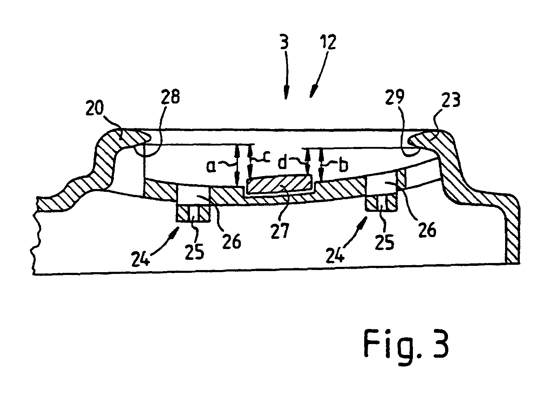

Figur 2 zeigt eine perspektivische Ansicht der in Figur 1 teilweise sichtbaren auf dem Unterbau 4 angeordneten Auflage 3. Die Auflage 3 ist als etwa rechteckförmige Wanne 12 mit einem Wannenboden 12a ausgebildet, die an drei Seiten von einem Steg 13 umgeben ist. In einem Mittelbereich 14 weist die Wanne 12 eine Vertiefung 15 gegenüber dem Wannenboden 12a auf. Die Vertiefung 15 ist zur Aufnahme eines Polstermittels 27 (siehe Figur 3) von 1 bis 3mm Dicke vorgesehen, das vorzugsweise der Kontur der Vertiefung 15 angepaßt und an dieser verklebt ist. Von der Vertiefung 15 aus steigt die Aufnahme 3 zu allen Seiten 16, 17, 18, 19 hin an. In der Mitte der Seite 16 ist ein etwa senkrechter Vorsprung 20 angeordnet, der als hakenförmige Nase 21 mit einer seitlichen Verblendung 22 ausgestaltet ist. Auf der Seite 17, die der Seite 16 gegenüberliegt, ist im Bereich des Stegs 13 ein weiterer Vorsprung 23 angeordnet, der sich etwa waagrecht und parallel zum Mittelbereich 14 erstreckt.

Figur 3 zeigt eine geschnittene Seitenansicht der in Figur 2 dargestellten Auflage 3, wobei der Schnitt entlang der Linie III-III verläuft. In Abweichung zu der Darstellung der Auflage 3 in Figur 2 sind in Figur 3 noch zwei Schraubendurchführungen 24 dargestellt. Sollte eine Verschraubung mit dem Unterbau 4 oder einem anderen unter der Aufnahme 3 liegenden Bauteil gewünscht oder erforderlich sein, dann können nicht dargestellte Schrauben die Auflage 3 in Durchbrüchen 25 durchgreifen. Weiterhin kommen die Köpfe der nicht dargestellten Schrauben in Senkungen 26 zur Auflage, so daß diese keinen störenden Einfluß auf den gegebenenfalls in der Aufnahme 3 liegenden Hörbereich 8 des Handapparats 2 haben. In Abweichung zu der Darstellung der Auflage 3 in Figur 2 ist in Figur 3 noch das Polstermittel 27 dargestellt. Durch das Polstermittel 27 werden die Abstände a, b zwischen dem Wannenboden 12a und Unterkanten 28 ,29 der Vorsprünge 20, 23 auf die Abstände c, d reduziert. Dies bewirkt, daß der Handapparat 2 mit einer leichten Vorspannung in der Aufnahme 3 gehalten wird, da das Polstermittel 27 den Handapparat 2 durch seine elastische Eigenschaft leicht gegen die Unterkanten 28, 29 der Vorsprünge 20, 23 drückt.

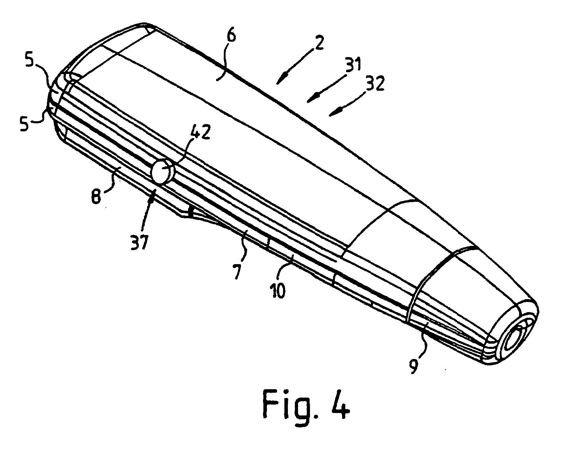

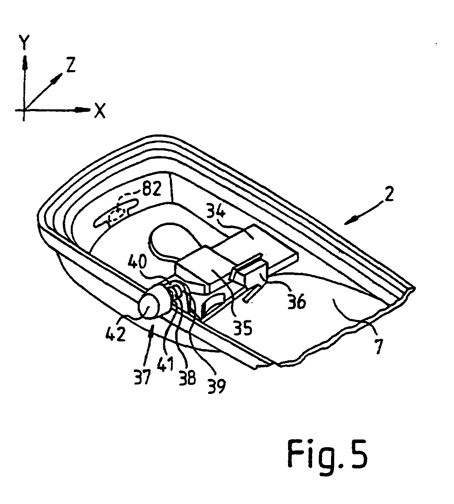

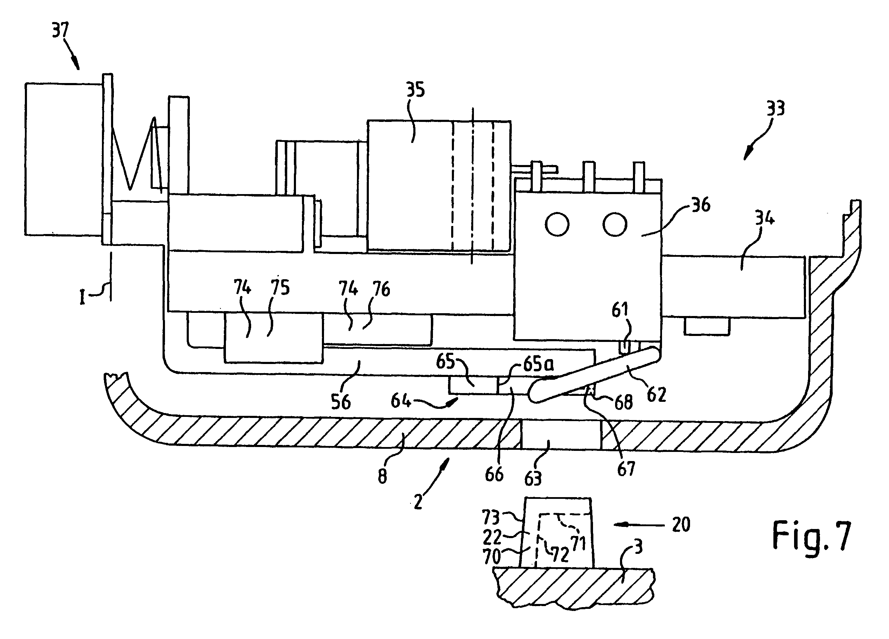

Figur 4 zeigt den in Figur 1 dargestellten Handapparat 2 in Alleinstellung, wobei der Hörbereich 8 in dieser Darstellung vollständig zu sehen ist und nicht durch den Steg 13 der Aufnahme 3 verdeckt wird. Nahe des Sprechbereichs 9 ist zwischen den Halbschalen 5 eine Zuführung 30 angeordnet. Durch die Zuführung 30 wird ein nicht dargestelltes Verbindungskabel zum Handapparat 2 geführt. Der dargestellte Handapparat 2 ist als Autotelefon 31 und/oder Funktelefon 32 ausgebildet. Im Hörbereich 8 besitzt der Handapparat 2 eine Ausnehmung 63 (siehe Figur 7) für den Eintritt des Vorsprungs 20 und einen als Tasche ausgebildeten Rücksprung 82 (in Figur 5 angedeutet) für das Eingreifen des Vorsprungs 23. Gemäß einer nicht dargestellten Variante der Erfindung ist ein Handapparat vorgesehen, der insbesondere als Mobiltelefon und/oder schnurloses Telefon und/oder Funkgerät mit oder ohne Schnurverbindung zu weiteren im Fahrzeug angeordneten Bauteilen ausgebildet ist.

Figur 5 zeigt eine perspektivische Ansicht der Frontschale 7 des Handapparats 2 mit einer erfindungsgemäßen Steuereinheit 33. Die Steuereinheit 33 besteht aus einem plattenförmigen Träger 34, einem PTT-Schalter 35, einem Hook-Schalter 36, dem Taster 37 und einer Druckfeder 38. Der PTT-Schalter 35 ist liegend auf dem Träger 34 angeordnet und wird in z-Richtung vom Taster 37 betätigt. Der Hook-Schalter ist kopfüber auf dem Träger 34 angeordnet und wird in y-Richtung von dem hier nicht dargestellten Vorsprung 20 betätigt. Die Druckfeder 38 ist auf einem runden Nocken 39 befestigt, der an einer Seitenwand 40 des Trägers 34 angeordnet ist. Der Taster 37 nimmt die Druckfeder 38 in einer Bohrung 41 des Kopfes 42 auf.

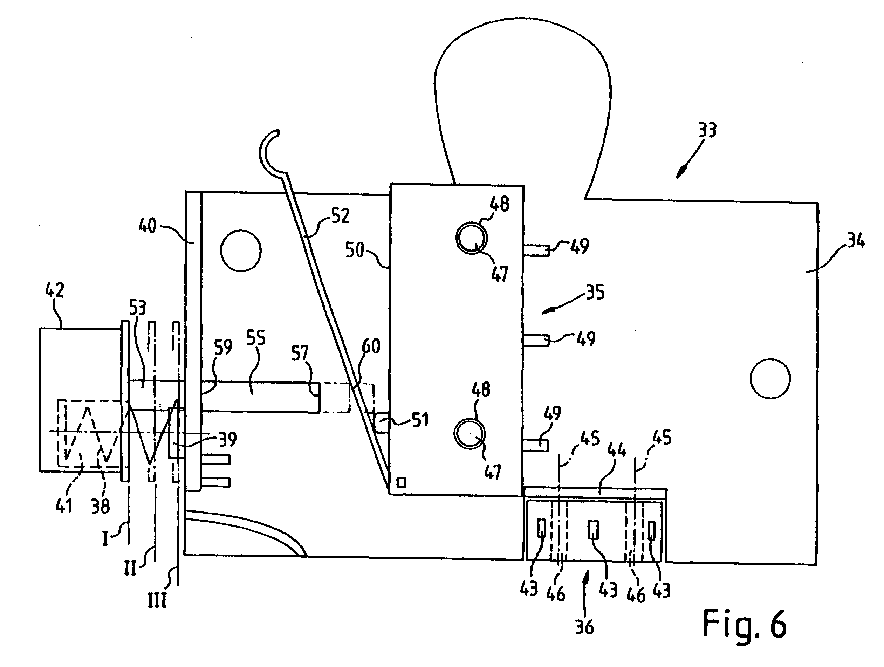

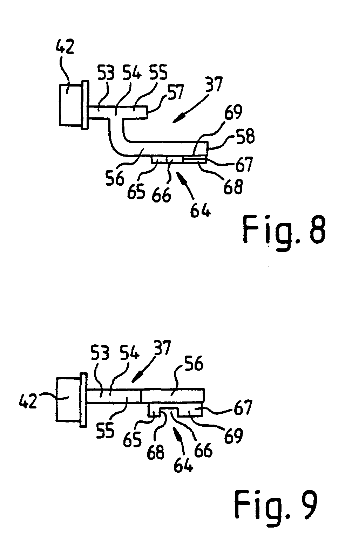

Figur 6 zeigt eine Draufsicht auf die in Figur 5 dargestellte Steuereinheit 33. In Figur 6 ist der Hook-Schalter 36 zu sehen, der drei Kontakte 43 aufweist und parallel zu einer mit dem Träger 34 in Verbindung stehenden Wand 44 angeordnet ist. Die Wand 44 trägt Stifte 45 (mit gestrichelten Linien angedeutet), die Bohrungen 46 des Hook-Schalters 36 durchgreifen und diesen halten. Der PTT-Schalter 35 ist liegend auf dem Träger 34 angeordnet. Der PTT-Schalter 35 wird durch senkrecht auf dem Träger 34 angeordnete Stifte 47 gehalten, die in Bohrungen 48 eingreifen. Weiterhin zeigt der PTT-Schalter 35 drei Kontakte 49. Auf der dem Taster 37 zugewandten Seite 50 trägt der PTT-Schalter 35 einen Taststößel 51, der durch eine am PTT-Schalter 35 drehbar angelenkte Kontaktwippe 52 eindrückbar ist. Auf dem an der Seitenwand 40 des Trägers 34 angeordneten Nocken 39 sitzt die Druckfeder 38. Diese wird von der gestrichelt angedeuteten und außermittig im Taster 37 angeordneten Bohrung 41 im Kopf 42 des Tasters 37 aufgenommen. Der Taster 37 besteht aus dem Kopf 42 und einem vom Kopf 42 wegführenden Stift 53, der sich an einem Kreuzungspunkt 54 in zwei Zinken 55, 56 aufgabelt (siehe Figuren 8 und 9). Diese weisen Enden 57, 58 auf. Mit der Zinke 55 durchgreift der Taster 37 einen Durchbruch 59 in der Seitenwand 40 und liegt mit dem Ende 57 der Kontaktwippe 52 gegenüber. In der Figur 6 ist der Taster 37 in der ungedrückten Stellung I (durchgezogen gezeichnet) dargestellt, die auch als Ruhestellung bezeichnet wird. In dieser Stellung I hat das Ende 57 der Zinke 55 keinen Kontakt mit der Konatktwippe 52, das heißt der PTT-Schalter 35 ist nicht gedrückt. In der gestrichelt dargestellten Freigabestellung II berühert das Ende 57 der Zinke 55 des Tasters 37 die Kontaktwippe 52 in einem Druckbereich 60, wobei die Kontaktwippe 52 noch keine Bewegung des Taststößels 51 bewirkt. In der Kontaktstellung III (gepunktet dargestellt) drückt das Ende 57 der Zinke 55 des Tasters 37 die Kontaktwippe 52 nieder, wobei die Kontaktwippe 52 ein Eindrücken des Taststößels 51 bewirkt (hier nicht dargestellt). Somit schaltet der PTT-Schalter 35. Die Druckfeder 38 bewirkt, daß der Taster 37 aus der Kontaktstellung III und aus der Freigabestellung II in die ungedrückte Stellung I zurückgeführt wird, wenn er losgelassen wird.

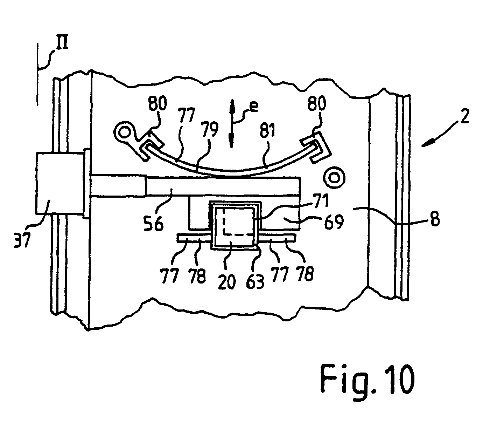

Figur 7 zeigt eine Seitenansicht der in den Figuren 5 und 6 dargestellten Steuereinheit 33. Figur 7 zeigt, daß der kopfüber am Träger 34 angeordnete Hook-Schalter 36 einen Taststößel 61 und eine Kontaktwippe 62 aufweist. Die Kontaktwippe 62 wird von dem Vorsprung 20 der Auflage 3 (diese ist in Figur 7 nur als Ausschnitt dargestellt) betätigt, wenn dieser bei auf der Auflage 3 ruhendem Handapparat 2 durch die Ausnehmung 63 im Hörbereich 8 des Handapparats 2 tritt (siehe auch Figur 10). Über die Kontaktwippe 62 wird der Taststößel 61 niedergedrückt und der Hook-Schalter 36 geschaltet. Das heißt die Elektronik des Handapparats 2 erfährt durch den geschalteten Hook-Schalter 36, daß der Handapparat aufgelegt ist und aktiviert und/oder deaktiviert entsprechende Funktionen wie zum Beispiel Abschalten einer Handapparatbeleuchtung und/oder Empfangsbereitschaft und/oder Umschalten auf eine Freisprecheinrichtung. In Bezug auf den PTT-Schalter 35 wird auf die Beschreibung zu Figur 6 verwiesen. Der Taster 37 weist an seiner Zinke 56 ein Sperrmittel 64 auf (siehe auch Figuren 8 und 9). Das Sperrmittel 64 besteht aus einem kurzen Vorsprung 65, einer Ausnehmung 66 und einem langen Vorsprung 67, der eine Anlaufschräge 68 aufweist. Weiterhin zeigt der kurze Vorsprung 65 einen Anschlag 65a. Der lange Vorsprung 67 besitzt eine Auflagefläche 69 (siehe Fig. 8 und 9). Der Vorsprung 20 mit der als Seitenwand 70 ausgestalteten Verblendung 22 weist eine Untergriffläche 71, einen ersten Anschlag 72 und einen zweiten Anschlag 73 auf. Im abgenommen Zustand des Handapparats 2 steht der Taster 37 in der in Figur 6 dargestellten Stellung I, wenn nicht gerade der PTT-Schalter 35 mit diesem bedient wird. Um den Handapparat 2 auf der Auflage 3 aufzulegen muß der Taster 37 bis in die in Figur 6 angedeutete Stellung II gedrückt werden. In dieser Stellung II liegt die Ausnehmung 66 des Tasters 37 genau über der Ausnehmung 63 des Handapparats 2. Somit kann der Vorsprung 20 durch die Ausnehmung 63 in den Handapparat 2 eindringen, ohne daß die Vorsprünge 65, 67 des Tasters 37 im Weg stehen. Wenn der Vorsprung 20 vollständig in den Handapparat 2 eingedrungen ist, das heißt, wenn der Hörbereich 8 auf der Aufnahme 3 aufliegt, dann kann der Taster 37 losgelassen werden und der Vorsprung 67 untergreift mit der Auflagefläche 69 die Untergriffläche 71 des Vorsprungs 20. Dies führt dazu, daß ein Trennen des Handapparats 2 von der Auflage 3 nicht mehr möglich ist, da der Vorsprung 67 vom Taster 37 festgehalten wird. Die Auflagefläche 69 wird von der Druckfeder 38 soweit unter den Vorsprung 20 geschoben bis sie am Anschlag 72 des Vorsprungs 20 anliegt. Selbstverständlich wird der Handapparat 2 vor dem Eindringen des Vorsprungs 20 schräg von oben so in die Auflage 3 geführt, daß zunächst der im Text zu Figur 4 beschriebene, nicht dargestellte Rücksprung des Handapparats 2 den Vorsprung 23 aufnimmt. Ein Lösen des Handapparats 2 von der Auflage 3 erfolgt durch ein Eindrücken des Tasters 37. Die Eindrucktiefe wird automatisch durch das Auftreffen des Anschlags 65a auf den Anschlag 73 des Vorsprungs 20 vorgegeben. In dieser Stellung des Tasters 37 wird der Vorsprung 20 nicht von der Auflagefläche 69 untergriffen und kann aus dem Handapparat 2 entnommen werden. Im aufgelegten Zustand der Handapparats 2 auf der Auflage 3 wird durch das Zusammenwirken des Anschlags 65a mit dem Anschlag 73 weiterhin wirksam verhindert, daß der Taster 37 die in Figur 6 beschriebene Stellung III einnimmt, in welcher der PTT-Schalter 35 durch den Taster 37 betätigt wird. Das heißt, der PTT-Schalter 37 kann im aufgelegten Zustand des Handapparats 2 nicht betätigt werden. Auf der Unterseite des Trägers 34 sind Leitelemente 74 angeordnet. Diese sind als Seitenführung 75 und als oberführung 76 ausgestaltet. Die Leitelemente 74 bewirken, daß die Zinke 56 des Tasters 37 weder seitlich noch zum Träger 34 hin ausweichen kann, wenn versucht wird, den Vorsprung 20 einzuführen solange sich der Taster nicht in der Stellung II befindet.

Gemäß einer nicht dargestellten Ausführungsvariante ist es vorgesehen, daß die Verbindung zwischen Handapparat 2 und Auflage 3 allein über den Vorsprung 20 hergestellt wird und kein zweiter Vorsprung erforderlich ist.

Figur 8 und 9 zeigen den Taster 37 in verschiedenen Ansichten. Hier wird auf die bereits im Text zu den Figuren 6 und 7 erfolgte Beschreibung des Tasters 37 verwiesen.

Figur 10 zeigt eine vereinfachte Draufsicht auf die Innenseite der Frontschale 8 bei auf die Auflage 3 aufgelegtem Handapparat 2, wobei der Taster 37 in Offenstellung I steht und der Träger 34 nicht dargestellt ist. Die Zinke 56 des Tasters 37 wird im Handapparat 2 durch an der Frontschale 7 angeordnete Leitelemente 77 geführt. Bei diesen handelt es sich um Längsführungen 78, die seitlich der Ausnehmung 63 angeordnet sind. Weiterhin handelt es ich um eine Längsführung 79, die als zwischen zwei Aufnahmen 80 eingespannte Blattfeder 81 ausgebildet ist. Die drei Leitelemente 77 wirken so zusammen, daß die Zinke 56 gegen in Richtung des Doppelpfeils e wirkende Störkräfte unempfindlich ist. Der Taster 37 befindet sich in der in Figur 6 beschriebenen Freigabestellung II. Der Vorsprung 20 ist vollständig in die Ausnehmung 63 eingedrungen. In dieser Stellung kann der Handapparat 2 entweder von der Aufnahme 3 (diese wird in Figur 10 vollständig vom Handapparat 2 verdeckt) abgenommen werden oder durch Loslassen des Tasters 37 mit dieser verriegelt werden. Die Verriegelung ist dann eingetreten, wenn des Taster 37 durch die nicht dargestellte Druckfeder 38 in die in Figur 6 als Stellung I beschriebene Position zurückgefahren ist. Hierbei untergreift der Taster 37 mit der Auflagefläche 69 die Untergrifffläche 71 des Vorsprungs 20.

Für die gesamte Beschreibung der Ausführungsbeispiele gilt, daß gleiche Bauteile mit gleichen Bezugszeichen gekennzeichnet sind.

Die Erfindung ist nicht auf die dargestellten oder beschriebenen Ausführungsbeispiele beschränkt. Sie umfaßt vielmehr Weiterbildungen der Erfindung im Rahmen der Schutzrechtsansprüche. Insbesondere sieht die Erfindung auch vor, daß die im Ausführungsbeispiel beschriebene mechanische Sperrung des PTT-Schalters im aufgelegten Zustand des Handapparats durch eine elektrische Schaltung verwirklicht wird, bei der die über den PTT-Schalter geführte Leitung bei gedrücktem Hook-Schalter unterbrochen wird.

Nach einer erfindungsgemäßen Ausführungsvariante ist es vorgesehen, daß die Kupplungseinrichtung aus einem in der Auflage vorgesehenen Rücksprung und einem am Handapparat angeordneten Vorsprung oder aus dem Handapparat ausfahrbaren Vorsprung besteht. Wobei der Vorsprung zum Kuppeln in den Rücksprung greift.

### Bezugszeichenliste:

- 1: Hörsprecheinrichtung
- 2: Handapparat
- 3: Auflage
- 4: Unterbau
- 5: Halbschale
- 6: Rückschale
- 7: Frontschale
- 8: Hörbereich
- 9: Sprechbereich
- 10: Mittelbereich
- 11: Spalt
- 12: Wanne
- 12a: Wannenboden
- 13: Steg
- 14: Mittelbereich
- 15: Vertiefung
- 16: Seite
- 17: Seite
- 18: Seite
- 19: Seite
- 20: Vorsprung
- 21: Nase
- 22: Verblendung
- 23: Vorsprung
- 24: Schraubendurchführung
- 25: Durchbruch
- 26: Senkung
- 27: Polstermittel
- 28: Unterkante
- 29: Unterkante
- 30: Zuführung
- 31: Autotelefon
- 32: Funktelefon
- 33: Steuereinheit
- 34: Träger
- 35: PTT-Schalter
- 36: Hook-Schalter
- 37: Taster
- 38: Druckfeder
- 39: Nocken
- 40: Seitenwand
- 41: Bohrung
- 42: Kopf
- 43: Kontakt
- 44: Wand
- 45: Stift
- 46: Bohrung
- 47: Stift
- 48: Bohrung
- 49: Kontakt
- 50: Seite
- 51: Taststößel
- 52: Kontaktwippe
- 53: Stift
- 54: Kreuzungspunkt
- 55: Zinke
- 56: Zinke
- 57: Ende
- 58: Ende
- 60: Druckbereich
- 61: TastStößel
- 62: Kontaktwippe
- 63: Ausnehmung
- 64: Sperrmittel
- 65: Vorsprung
- 66: Ausnehmung
- 67: Vorsprung
- 68: Anlaufschräge
- 69: Auflagefläche
- 70: Seitenwand
- 71: Untergriffläche
- 72: Anschlag
- 73: Anschlag
- 74: Leitelement
- 75: Seitenführung
- 76: Oberführung
- 77: Leitelement
- 78: Längsführung
- 79: Längsführung
- 80: Aufnahme
- 81: Blattfeder
- 82: Rücksprung

## Patentansprüche

1. Hörsprecheinrichtung bestehend aus einem Handapparat (2) und einer Aufnahmevorrichtung (3) für denselben, wobei zwischen Aufnahmevorrichtung (3) und Handapparat (2) eine lösbare Kupplungseinrichtung (20, 56) vorgesehen ist, die in eine Öffnung einsteckbar ist und einrastet, wobei eine Verriegelung und/oder Entriegelung durch einen im Handapparat (2) angeordneten Taster (37) erfolgt und die Kupplungseinrichtung (20, 56) im gekuppelten Zustand von Aufnahmevorrichtung (3) und Handapparat (2) einen ersten elektromechanischen Schalter (36) betätigt, mit dem eine Hook-Funktion, nämlich eine aufgelegte Hörer-Funktion, und/oder eine Freisprechfunktion aktivierbar ist, **dadurch gekennzeichnet, daß** der Taster (37) gleichzeitig für eine Betätigung eines weiteren elektromechanischen Schalters (35) dient, mittels welchem eine Push-To-Talk-Funktion bzw. Sendefunktion für einen Funkbetrieb aktivierbar ist.

2. Hörsprecheinrichtung nach Anspruch 1, **dadurch gekennzeichnet, daß** der Handapparat (2) zweiteilig ausgebildet ist, wobei der Handapparat (2) aus einem Handyhalter, der mit der Aufnahmevorrichtung (3) koppelbar ist, und einem Handy, das in den Handyhalter einlegbar ist, besteht und wobei der Taster (37) am Handyhalter angeordnet ist.

3. Hörsprecheinrichtung nach einem der vorhergehenden Ansprüche, **dadurch gekennzeichnet, daß** die Aufnahmevorrichtung (3) mindestens einen weiteren Vorsprung (20) aufweist, der in eine Ausnehmung (63) des Gehäuses des Handapparats (2) einsteckbar ist.

4. Hörsprecheinrichtung nach einem der vorhergehenden Ansprüche, **dadurch gekennzeichnet, daß** der an dem Handapparat (2) angeordnete Taster (37) durch mindestens eine Führung (74, 75, 77, 78, 79, 81) in Bewegungsrichtung geführt ist.

5. Hörsprecheinrichtung nach einem der vorhergehenden Ansprüche, **dadurch gekennzeichnet, daß** der an dem Handapparat (2) angeordnete Taster (37) in Bewegungsrichtung durch mindestens eine Blattfeder (81) geführt ist.

6. Hörsprecheinrichtung nach einem der vorhergehenden Ansprüche, **dadurch gekennzeichnet, daß** der an dem Handapparat (2) angeordnete Taster (37) durch mindestens eine Feder (38) in Richtung einer Ruhestellung beaufschlagt ist.

7. Hörsprecheinrichtung nach einem der vorhergehenden Ansprüche, **dadurch gekennzeichnet, daß** der an dem Handapparat (2) angeordnete Taster (37) gabelförmig ausgestaltet ist, wobei eine Zinke (55) zur Betätigung des elektromechanischen Schalters (35) und/oder eine weitere Zinke (56) zum Greifen eines Vorsprungs (20) vorgesehen ist.

8. Hörsprecheinrichtung nach einem der vorhergehenden Ansprüche, **dadurch gekennzeichnet, daß** der Vorsprung (20) als hakenförmige Nase (21) ausgestaltet ist.

9. Hörsprecheinrichtung nach einem der vorhergehenden Ansprüche, **dadurch gekennzeichnet, daß** die hakenförmige Nase (21) an einer Seite eine Begrenzungswand (22) aufweist.

10. Hörsprecheinrichtung nach einem der vorhergehenden Ansprüche, **dadurch gekennzeichnet, daß** durch die Begrenzungswand (22) ein vollständiges Durchdrücken des Tasters (37) verhindert ist.

11. Hörsprecheinrichtung nach einem der vorhergehenden Ansprüche, **dadurch gekennzeichnet, daß** die Sendefunktion nur bei vollständig durchgedrücktem Taster (37) aktivierbar ist.

12. Hörsprecheinrichtung nach einem der vorhergehenden Ansprüche, **dadurch gekennzeichnet, daß** die Aufnahmevorrichtung (3) als einteiliges Spritzgußteil ausgestaltet ist.

13. Hörsprecheinrichtung nach einem der vorhergehenden Ansprüche, **dadurch gekennzeichnet, daß** die beiden elektromechanischen Schalter (35, 36), der Taster (37) und die Führungen (74, 75, 76) auf einem gemeinsamen Träger (34) angeordnet sind und als Baugruppe in dem Handapparat (2) montierbar sind.

14. Hörsprecheinrichtung nach einem der vorhergehenden Ansprüche, **dadurch gekennzeichnet, daß** der Handapparat (2) insbesondere ein schnurloses und/oder schnurgebundenes Funktelefon (32) und/oder Mobiltelefon ist.

15. Hörsprecheinrichtung nach einem der vorhergehenden Ansprüche, **dadurch gekennzeichnet, daß** mit dem elektromechanischen Schalter (35) eine Ausschaltefunktion des Handapparats (2) betätigbar ist, wobei durch die Ausschaltefunktion insbesondere eine Aktivierung eines Kennwortschutzes des Handapparats (2) bewirkt wird.

16. Hörsprecheinrichtung nach einem der vorhergehenden Ansprüche, **dadurch gekennzeichnet, daß** die Blattfeder (81) in am Gehäuse des Handapparats angespritzten Aufnahmen (80) insbesondere an Aufnahmedomen gelagert ist, die Bohrungen für die Verschraubung des Trägers aufweisen.

## Claims

1. Talk-listen device comprising a handset (2) and a holding apparatus (3) for the latter, wherein between holding apparatus (3) and handset (2) a releasable coupling device (20, 56) is provided, which is insertable into an opening and snaps into place, wherein locking and/or unlocking is effected by means of a pushbutton (37) disposed in the handset (2) and, in the coupled state of holding apparatus (3) and handset (2), the coupling device (20, 56) actuates a first electromechanical switch (36) for activating a hook function, namely a replaced-receiver function, and/or a hands-free function, **characterised in that** the pushbutton (37) is used simultaneously for actuation of a further electromechanical switch (35) for activating a push-to-talk function and/or send function for a radio service.

2. Talk-listen device according to claim 1, **characterised in that** the handset (2) is of a two-piece construction, wherein the handset (2) comprises a mobile phone holder, which is cpnnectable to the holding apparatus (3), and a mobile phone, which is insertable into the mobile phone holder, and wherein the pushbutton (37) is disposed on the mobile phone holder.

3. Talk-listen device according to one of the preceding claims, **characterised in that** the holding apparatus (3) has at least one further projection (20), which is insertable into a recess (63) of the housing of the handset (2).

4. Talk-listen device according to any one of the preceding claims, **characterised in that** the pushbutton (37) disposed on the handset (2) is guided in the direction of motion by means of at least one guide (74, 75, 77, 78, 79, 81).

5. Talk-listen device according to any one of the preceding claims, **characterised in that** the pushbutton (37) disposed on the handset (2) is guided in the direction of motion by means of at least one leaf spring (81).

6. Talk-listen device according to any one of the preceding claims, **characterised in that** the pushbutton (37) disposed on the handset (2) is loaded in the direction of a normal position by means of at least one spring (38).

7. Talk-listen device according to any one of the preceding claims, **characterised in that** the pushbutton (37) disposed on the handset (2) is of a fork-shaped design, wherein one prong (55) is provided for actuating the electromechanical switch (35) and/or a further prong (56) is provided for gripping a projection (20).

8. Talk-listen device according to any one of the preceding claims, **characterised in that** the projection (20) takes the form of a hook-shaped lug (21).

9. Talk-listen device according to any one of the preceding claims, **characterised in that** the hook-shaped lug (21) at one side has a boundary wall (22).

10. Talk-listen device according to any one of the preceding claims, **characterised in that** the boundary wall (22) prevents the pushbutton (37) from being fully pressed through.

11. Talk-listen device according to any one of the preceding claims, **characterised in that** activation of the send function is possible only in the fully pressed-through state of the pushbutton (37).

12. Talk-listen device according to any one of the preceding claims, **characterised in that** the holding apparatus (3) takes the form of an integral injection-moulded part.

13. Talk-listen device according to any one of the preceding claims, **characterised in that** the two electromechanical switches (35, 36), the pushbutton (37) and the guides (74, 75, 76) are disposed on a common carrier (34) and may be fitted as a module in the handset (2).

14. Talk-listen device according to any one of the preceding claims, **characterised in that** the handset (2) is in particular a cordless and/or cord-connected radio-telephone (32) and/or mobile telephone.

15. Talk-listen device according to any one of the preceding claims, **characterised in that** by means of the electromechanical switch (35) a switch-off function of the handset (2) is actuable, wherein the switch-off function, in particular, effects activation of a password protection of the handset (2).

16. Talk-listen device according to any one of the preceding claims, **characterised in that** the leaf spring (81) is mounted in receivers (80), which are injection-moulded on the housing of the handset, in particular on receiving domes, which have drill holes for the screw-connection of the carrier.

## Revendications

1. Système de communication vocale composé d'un appareil à main (2) et d'un dispositif de réception (3) pour celui-ci, dans lequel
entre le dispositif de réception (3) et l'appareil à main (2) il est prévu un dispositif de liaison amovible (20, 56) qui s'engage dans une ouverture et s'accroche, le verrouillage et/ou le déverrouillage se faisant à l'aide d'une touche (37) équipant l'appareil à main (2), et
l'installation de liaison (20, 56) à l'état relié du dispositif de support (3) et de l'appareil à main (2) actionnant un premier commutateur électromagnétique (36) avec une fonction de crochet, à savoir l'activation d'une fonction d'écouteur reposé et/ou d'une fonction de communication main libre,
**caractérisé en ce que**
la touche (37) sert en même temps à l'actionnement d'un autre commutateur électromécanique (35) à l'aide duquel on peut activer une fonction « pousser pour parler » ou une fonction d'émission pour un mode radio.

2. Système de communication locale selon la revendication 1,
**caractérisé en ce que**
l'appareil à main (2) est réalisé en deux parties, l'appareil à main (2) se composant d'un support de téléphone mobile qui peut être couplé au dispositif de support (3) et d'un téléphone mobile qui se place dans le support de téléphone mobile, et la touche (37) est prévue sur le support de téléphone mobile.

3. Système de communication vocale selon l'une des revendications précédentes,
**caractérisé en ce que**
le dispositif de support (2) comporte au moins une autre saillie (20) qui s'engage dans une découpe (63) du boîtier de l'appareil à main (2).

4. Système de communication vocale selon l'une des revendications précédentes,
**caractérisé en ce que**
la touche (37) équipant l'appareil à main (2) est guidée dans le sens du mouvement par au moins un moyen de guidage (74, 75, 77, 78, 79, 81).

5. Système de communication vocale selon l'une des revendications précédentes,
**caractérisé en ce que**
la touche (37) de l'appareil à main (2) est guidée dans la direction du mouvement par au moins un ressort lame (81).

6. Système de communication vocale selon l'une des revendications précédentes,
**caractérisé en ce que**
la touche (37) équipant l'appareil à main (2) est sollicitée par au moins un ressort (38) dans le sens de sa position de repos.

7. Système de communication vocale selon l'une des revendications précédentes,
**caractérisé en ce que**
la touche (37) de l'appareil à main (2) est en forme de fourche et une dent (55) est prévue pour actionner le commutateur électromécanique (35) et/ou une autre dent (56) pour venir prendre dans une partie en saillie (20).

8. Système de communication vocale selon l'une des revendications précédentes,
**caractérisé en ce que**
la partie en saillie (20) est en forme de nez à crochet (21).

9. Système de communication vocale selon l'une des revendications précédentes,
**caractérisé en ce que**
le nez en forme de crochet (21) présente d'un côté une cloison de délimitation (22).

10. Système de communication vocale selon l'une des revendications précédentes,
**caractérisé en ce que**
la cloison de délimitation (22) évite que la touche (37) ne soit enfoncée complètement de façon traversante.

11. Système de communication vocale selon l'une des revendications précédentes,
**caractérisé en ce que**
la fonction d'émission n'est activée que lorsque la touche (37) est complètement enfoncée.

12. Système de communication vocale selon l'une des revendications précédentes,
**caractérisé en ce que**
le dispositif de réception (3) est réalisée sous la forme d'une pièce en fonte injectée en une seule partie.

13. Système de communication vocale selon l'une des revendications précédentes,
**caractérisé en ce que**
les deux commutateurs électromécaniques (35, 36), la touche (37) et les moyens de guidage (74, 75, 76) sont installés sur un support commun (34) et sont montés sous la forme d'un ensemble dans l'appareil à main (2).

14. Système de communication vocale selon l'une des revendications précédentes,
**caractérisé en ce que**
l'appareil à main (2) est notamment un radio téléphone (32) sans fil et/ou lié à un fil et/ou un téléphone mobile.

15. Système de communication vocale selon l'une des revendications précédentes,
**caractérisé en ce qu'**
une fonction de coupure de l'appareil à main (2) peut être actionnée à l'aide du commutateur électromécanique (35) et la fonction de coupure produit notamment une activation d'une protection par mot caractéristique de l'appareil à main (2).

16. Système de communication vocale selon l'une des revendications précédentes,
**caractérisé en ce que**
le ressort lame (81) est installé dans des logements (80) réalisés dans le boîtier injecté de l'appareil, en particulier au niveau des dômes de réception, comportant des perçages pour visser le support.
